(19) Europäisches Patentamt

European Patent Office

Office européen des brevets

(11) Veröffentlichungsnummer: **0 264 829 B1**

# (12) EUROPÄISCHE PATENTSCHRIFT

(45) Veröffentlichungstag der Patentschrift: **20.05.92**

(21) Anmeldenummer: **87115090.0**

(22) Anmeldetag: **15.10.87**

(51) Int. Cl.⁵: **E04B 2/74**, F16B 12/26

---

## (54) Verbindungsbeschlag.

---

(30) Priorität: **20.10.86 DE 8627937 U**

(43) Veröffentlichungstag der Anmeldung:
**27.04.88 Patentblatt 88/17**

(45) Bekanntmachung des Hinweises auf die
Patenterteilung:
**20.05.92 Patentblatt 92/21**

(84) Benannte Vertragsstaaten:
**AT BE CH DE FR IT LI LU NL**

(56) Entgegenhaltungen:
**EP-A- 0 171 813**
**DE-U- 8 627 937**
**FR-A- 2 304 808**
**US-A- 4 266 882**

(73) Patentinhaber: **G. UNTERHOLZNER INNENAUS-
BAU OHG
Handwerkerzone
I-39025 Naturns(IT)**

(72) Erfinder: **Unterholzner, Gottfried
Handwerkerzone
I-39025 Naturns(IT)**

## Beschreibung

Die vorliegende Neuerung betrifft einen Verbindungsbeschlag, insbesondere zur Verbindung von Bürotrennwänden.

Bei der Einrichtung von Büroräumen besteht häufig die innenarchitektonische Aufgabe, den Raum in kleinere Unterabteilungen abzuteilen. Dazu werden im Normalfall Trennwände aus Spanplatten eingesetzt. Grundsätzlich bestehen diese Trennwände aus zwei parallel zueinander angeordneten Spanplatten bestimmter Dicke, die zusammen mit dem von ihnen eingeschlossenen Zwischenraum eine Normdicke für die gesamte Bürotrennwand einnehmen. Es besteht nun die Aufgabe, die Spanplatte in einem bestimmten Abstand zueinander mit geeigneten Verbindungsbeschlägen zu fixieren.

Verbindungsbeschläge, wie beispielsweise Schnappbeschläge zur Eindrückbefestigung von Blenden und anderen Vorsatzelementen an Rahmenteilen oder Korpusteilen, sind weitgehend bekannt. Dabei wird an dem Rahmen- oder Korpusteil ein erster Beschlagteil mit einer entsprechenden Rastnase angebracht, und ein zweiter Beschlagteil mit einer entsprechenden Rastkante, in welche die Rastnase eingreifen kann, befindet sich an der Blende oder dem Vorsatzelement.

Insbesondere in der deutschen Patentschrift DE-A-34 30 068 ist ein Verbindungsbeschlag beschrieben, der als Schnappbeschlag zur Eindrückbefestigung von Blenden und anderen Vorsatzelementen an Rahmenteilen oder Korpusteilen dient. Hierbei weist an dem Rahmen- oder Korpusteil ein erster Beschlagteil einer an einer Tragplatte angeordneter Zunge eine Rastnase in einer Eingriffsfläche auf und an der Blende oder dem Vorsatzelement ein zweiter Beschlagteil eine ebenfalls an einer Tragplatte angeordnete Führungsrinne mit einer an die Eingriffsfläche des ersten Beschlagteil angepaßten Rastkante, wobei die Seitenwände der Führungsrinne in Einschubrichtung geneigt zueinander verlaufen und die im Befestigungszustand hieran anliegenden Seitenränder der Zunge eine entsprechende Neigung aufweisen. Dabei ist die Rastkante des zweiten Beschlagteils an der zwischen den Seitwänden gelegenen Fußwandung der Führungsrinne vorgesehen und die Zunge mit der Fußwandung dadurch verrastbar, wobei die Rastkante und die Rastnase zur Lösbarkeit der Verbindung ein in Einschubrichtung geneigt verlaufendes Profil aufweisen. Die Zunge ist gegenüber der Befestigungsseite der Tragplatte des ersten Beschlagteils um die Dicke der Fußwandung der Führungsrinne des zweiten Beschlagteils so versetzt, daß die Fußwandung der Führungsrinne im Befestigungszustand zwischen der Zunge und dem Rahmenteil gehalten ist. Diese Ausbildung der Rastung des Schnappbeschlags sichert eine Schnappwirkung und eine klemmende Festhaltung sowie eine Lösbarkeit durch Herausziehen.

Allerdings ist ein derartiger Schnappbeschlag nur für Verbindungen von Elementen möglich, die in einem 90° Winkel zueinander angeordnet sind. Weiterhin ist zur Verbindung die Fußwand des einen Beschlagteils zwischen der Zunge des anderen Beschlagteils und der Wand, auf die das die Zunge aufweisende Beschlagteil aufgeschraubt ist, eingeklemmt. Die Klemmwirkung wird also erst im zusammengebauten Zustand erreicht, d.h. wenn der Beschlag auf einer Platte montiert ist. Derartige Beschläge sind zur parallelen Abstandshaltung von Bürotrennwänden ungeeignet.

Es besteht daher die Aufgabe, Verbindungsbeschläge zur Verfügung zu stellen, die zueinander parallel verlaufende Trennwände in einem vorher bestimmten Abstand zueinander sicher fixieren.

Die Lösung dieser Aufgabe besteht im kennzeichnenden Teil des Anspruchs 1.

Bevorzugte Ausführungsformen der Neuerung sind in den darauffolgenden Unteransprüchen aufgeführt.

Weitere Einzelheiten, Merkmale und Vorteile der vorliegenden Neuerung ergeben sich aus der folgenden Beschreibung einer bevorzugten Ausführungsform.

Es zeigen:

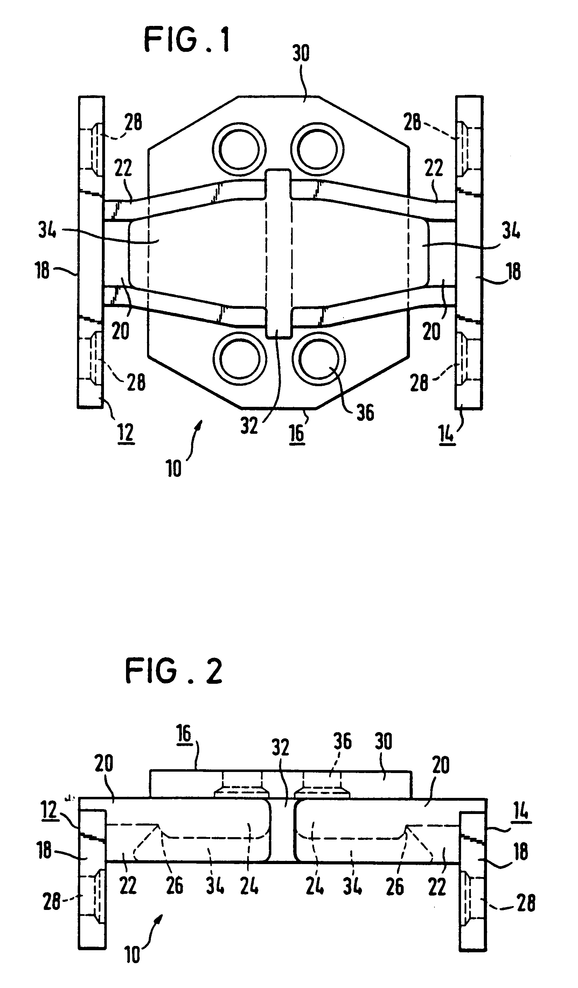

Figur 1   eine Ansicht von oben auf den neuerungsgemäßen Verbindungsbeschlag und

Figur 2   eine Seitenansicht des neuerungsgemäßen Verbindungsbeschlags.

Der Beschlag 10 umfaßt drei Beschlagteile 12, 14, 16. Die Beschlagteile 12 und 14 sind identisch aufgebaut. Sie bestehen jeweils aus einer Grundplatte 18, an der im rechten Winkel eine Einrastplatte 20 angeformt ist. An ihren seitlichen Rändern weist die Einrastplatte 20 senkrecht zu ihr stehende Begrenzungswände 22 auf. Diese Begrenzungswände 22 folgen der Grundfläche der Einrastplatte 20 und nehmen so näherungsweise die Kontur eines "V" an. Die Einrastplatte 20 ist an ihrer von der Grundplatte 18 wegweisenden Seite verdickt. An ihrem der Grundplatte gegenüberliegenden Übergang weist das verdickte Ende 24 einen angeschrägten Übergang zur Einrastplatte 20 hin auf, dessen Schräge von der Grundplatte 18 aus wegweist. Diese Schräge bildet die Rastkante 26.

In der Grundplatte 18 sind jeweils Bohrungen 28 derart vorgesehen, daß sie Senkschrauben (hier nicht dargestellt) aufnehmen können, die zur Befestigung dieses Beschlagteils an einer der Bürotrennwände dienen.

Das Beschlagteil 16 ist aus einer Grundplatte 30, einem Mittelsteg 32 und zwei Zungen 34 aufgebaut. Der Mittelsteg 32 ist entlang der zur längeren Seite der Grundplatte 30 verlaufenden Mittellinie ausgerichtet. Von dieser weisen die beiden Zungen 34 nach außen weg. Dabei sind die Zungen 34 in einer Höhe am Mittelsteg 32 angeordnet, daß zwischen ihrer Unterfläche und der oberen Fläche der Grundplatte 30 die Einrastplatte 20 eingepaßt ist. Am Abschluß der Zunge ist eine der Schräge der Rastkante 26 der Einrastplatte 20 entsprechende Verdickung angebracht, die nach Einsetzen der Einrastplatte 20 zwischen der Grundplatte 30 und der Zunge 34 ein Herausrutschen der Einrastplatte 20 verhindert. Seitlich wird die Zunge 34 durch die Seitenwände 22 der Einrastplatte 20 fixiert, da die Zunge die gleiche "V"-ähnliche Form aufweist wie die Einrastplatte 20.

Die Grundplatte 30 des Beschlagteils 16 weist vier Bohrungen zur Aufnahme von Senkschrauben (nicht dargestellt) auf, so daß sie in eine Wand oder einen senkrechtstehenden Träger eingeschraubt werden kann und damit eine Montage der Bürotrennwände ermöglicht. Falls der Verbindungsbeschlag nur zur Abstandshaltung und gegenseitigen Fixierung der Trennwände dient, sind keine Schraublöcher vorgesehen.

**Patentansprüche**

1. Verbindungsbeschlag, insbesondere zur Verbindung von Bürotrennwänden, mit zwei Beschlagteiltypen, wobei der eine Beschlagteiltyp (12, 14) eine Einrastplatte im 90° Winkel zu seiner Grundplatte (18) aufweist und der andere Beschlagteiltyp (16) zumindest eine Zunge (34) zur Einrastverbindung mit der Einrastplatte (20) des ersten Beschlagteiltyps aufweist,
**dadurch gekennzeichnet,**
daß der zweite Beschlagteiltyp (16) auf einer Grundplatte (30) einen senkrecht nach oben stehenden Mittelsteg (32) aufweist, an dessen oberem Ende zwei in entgegengesetzte Richtungen und zum Grundplattenrand hinweisende Zungen (34), die parallel zur Grundplatte (30) verlaufen, angeformt sind, und zwei Beschlagteile (12, 14) des ersten Beschlagteiltyps mit ihren Einrastplatten (20) im zusammengesetzten Zustand lösbar zwischen der Grundplatte (30) und der jeweiligen Zunge (34) in Eingriff gehen.

2. Verbindungsbeschlag nach Anspruch 1,
**dadurch gekennzeichnet,**
daß auf der Grundplatte (30) ein oder mehrere Bohrungen zur Aufnahme von Schrauben- oder Nagelköpfen an den Teilflächen vorgesehen sind, die nicht von der Zunge (34) überdeckt werden.

3. VerbindungsBeschlag nach Anspruch 1 und/oder 2,
**dadurch gekennzeichnet,**
daß alle Beschlagteile (12, 14, 16) aus spritzgegossenem Kunststoff bestehen.

**Claims**

1. Connection brace, in particular for connecting dividing walls for offices, including two types of brace element, one (12, 14) of said types having a snap-on plate at a 90° angle to its base plate (18), the other type (16) having at least one tongue (34) for a snap connection with the snap-on plate (20) of the first type of element,
**characterized in**
that the second type of brace element (16) has a vertically upward protruding center web (32) on one base plate (30), at the upper end of which web two tongues (34) are formed, projecting in opposite directions and toward the edge of the base plate and extending in parallel to the base plate (30), and two brace elements (12, 14) of the first type of brace element, when assembled with their snap-on plates (20), releasably engage between the base plate (30) and the corresponding tongue (34).

2. Connection brace according to claim 1,
**characterized in**
that one or several bores are provided in the base plate (30) for accommodating screw or nail heads at those partial surfaces not covered by the tongue (34).

3. Connection brace according to claim 1 and/or 2,
**characterized in**
that all brace elements (12, 14, 16) comprise jet-molded plastics.

**Revendications**

1. Dispositif d'attache, particulièrement pour la jonction de parois de séparation pour bureaux, comprenant deux types d'élément d'attache, dont l'un (12, 14) comporte une plaque à encliquetage à un angle de 90° de son plaque de base (18), et dont l'autre (16) comporte au moins une languette (34) pour être verrouillée par la plaque à encliquetage (20) du premier type d'élément d'attache,
**caractérisé en ce**
que le deuxième type d'élément d'attache (16) comprend une traverse (32) au milieu d'une plaque de base (30), ladite traverse s'étendant verticalement vers le haut, à l'extrémité supérieure de laquelle sont formées deux languettes (34) en directions opposées et en direction du bord de la plaque de base, lesdites languettes s'étendant en parallel vers la plaque de base (30), et que deux éléments d'attache (12, 14) du premier type d'élément d'attache, assemblés avec leurs plaques à encliquetage (20), viennent en prise détachable entre la plaque de base (30) et la languette (34) correspondante.

2. Dispositif d'attache suivant la revendication 1, **caractérisé en ce**
   dans ladite plaque de base (30) sont prévues une ou plusieurs forures pour accueiller des têtes de vis ou de clous aux surfaces partielles qui ne sont pas recouvertes de la languette (34).

3. Dispositif d'attache suivant la revendication 1 et/ou 2,
   **caractérisé en ce**
   que tous les éléments d'attache (12, 14, 16) sont en plastique moulé par injection.

## FIG . 1

## FIG . 2